(19) Europäisches Patentamt
European Patent Office
Office européen des brevets

(11) **EP 4 512 851 A1**

(12) **EUROPEAN PATENT APPLICATION**
published in accordance with Art. 153(4) EPC

(43) Date of publication:
**26.02.2025 Bulletin 2025/09**

(21) Application number: **23791779.4**

(22) Date of filing: **13.04.2023**

(51) International Patent Classification (IPC):
*C08J 5/04* (2006.01)     *B29C 70/12* (2006.01)
*B29C 70/48* (2006.01)     *B29C 70/54* (2006.01)
*B29K 307/04* (2006.01)

(52) Cooperative Patent Classification (CPC):
**B29C 70/12; B29C 70/48; B29C 70/54; C08J 5/04**

(86) International application number:
**PCT/JP2023/015001**

(87) International publication number:
**WO 2023/204131 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.04.2022  JP 2022069295**

(71) Applicant: **Toray Industries, Inc.**
**Tokyo 103-8666 (JP)**

(72) Inventors:
• **TAKEBE Yoshiki**
**Iyo-gun, Ehime 791-3193 (JP)**
• **KAWAHARA Kota**
**Iyo-gun, Ehime 791-3193 (JP)**
• **HONMA Masato**
**Iyo-gun, Ehime 791-3193 (JP)**

(74) Representative: **Kador & Partner Part mbB**
**Corneliusstraße 15**
**80469 München (DE)**

(54) **FIBER-REINFORCED RESIN MOLDED BODY AND METHOD FOR PRODUCING SAME**

(57)     Provided is a fiber-reinforced resin molded body that has continuous voids and includes a carbon fiber nonwoven fabric and a thermosetting resin, in which the continuous voids have a porosity of 50% by volume to 97% by volume, and contact points of discontinuous carbon fibers constituting the carbon fiber nonwoven fabric are immobilized by the thermosetting resin having a substantially spherical shape of 40 μm to 300 μm in diameter. Also provided is a method of producing a fiber-reinforced resin molded body, the method including the following steps in the order mentioned: the preform forming step of forming a preform including a carbon fiber nonwoven fabric in a molding die; the injection preparation step of forming a closed space in which the preform is arranged; the injection step of injecting a liquid thermosetting resin into the closed space; the porosity adjustment step of allowing the carbon fiber nonwoven fabric to expand in the thickness direction; and the curing step of maintaining the preform at a temperature equal to or higher than a curing temperature of the thermosetting resin. According to this method, a fiber-reinforced resin molded body that includes a carbon fiber nonwoven fabric and a thermosetting resin is simply produced.

EP 4 512 851 A1

**Description**

Technical Field

The present invention relates to a fiber-reinforced resin molded body and a method of producing the same. More particularly, the present invention relates to: a fiber-reinforced resin molded body that includes a carbon fiber nonwoven fabric and a thermosetting resin; and a method of producing the fiber-reinforced resin molded body by resin transfer molding.

Background Art

Fiber-reinforced resin molded bodies, in which a thermosetting resin is used as a matrix and combined with discontinuous carbon fibers of a nonwoven fabric or the like, are lightweight and have excellent mechanical properties such as strength and rigidity, heat resistance, and corrosion resistance as compared to metal materials and the like and, therefore, have been applied to many fields, including aerospace, automobiles, railway vehicles, ships, civil engineering and construction, sporting goods, and computer products. From the standpoint of energy saving in the fields of transportation vehicles, aviation, and the like, as well as from the standpoint of ease of handling and workability in the fields of sporting goods and civil engineering and construction, such fiber-reinforced resin molded bodies are required to be not only lightweight and rigid but also reduced in cost through improvement in the productivity, and attempts have been made to improve these features by various production methods. However, the market demands are high, and there is an urgent need to improve the productivity by adopting a simple production method of a lightweight and highly rigid fiber-reinforced resin molded body.

Patent Literature 1 discloses a carbon fiber mat excellent in matrix resin impregnation properties. Patent Literature 2 discloses a method of obtaining a porous body that contains a combination of discontinuous reinforcing fibers and a thermoplastic resin or a thermosetting resin by compression molding. Patent Literature 3 discloses a fiber-reinforced resin molded body obtained by preparing a sheet composed of short carbon fibers at a small area weight, laminating the sheet in plural layers, and then performing a vacuum resin impregnation process.

Citation List

Patent Literature

[Patent Literature 1] JP 2006-77343
[Patent Literature 2] WO 2017/110528
[Patent Literature 3] JP 2016-151081

Summary of Invention

Technical Problem

However, in Patent Literature 1, although the carbon fiber mat can be used as a substrate for resin transfer molding since resin flow paths are formed therein to control the water permeability of the mat formed of carbon fibers in a specific range, it cannot be said that the molding method is optimized. Therefore, it is hardly said that the productivity is improved. Further, a molded article produced from the mat contains no void inside, resulting in an increase in weight. Patent Literature 2 is a technology that achieves both satisfactory lightweightness and satisfactory rigidity by controlling the amounts of the reinforcing fibers, the resin, and voids, as well as the fiber orientation angle in a structure formed of a fiber-reinforced resin molded body, and this technology is useful for fiber-reinforced resin molded bodies. However, there is a problem in terms of improving the productivity since the process of impregnating the resin into a nonwoven fabric formed of the reinforcing fibers is carried out by compression molding, and this generally leads to a prolonged impregnation process. Patent Literature 3 is a technology for obtaining a fiber-reinforced resin molded body containing no void inside with the use of a carbon fiber sheet having a small area weight by a vacuum resin impregnation method that is one mode of resin transfer molding. In this technology, it is necessary to laminate a large number of sheets in accordance with the thickness of the desired product, and a method of impregnating a thermosetting resin is not examined; therefore, the productivity needs to be improved.

Under these circumstances, there is an urgent need to develop a lightweight fiber-reinforced resin molded body and a method by which a fiber-reinforced resin molded body can be simply produced through resin transfer molding.

Solution to Problem

In order to solve the above-described problems, the present invention has the following constitution.

[1] A fiber-reinforced resin molded body, having continuous voids and including:

a carbon fiber nonwoven fabric; and
a thermosetting resin,
wherein
the continuous voids have a porosity of 50% by volume to 97% by volume, and
contact points of discontinuous carbon fibers constituting the carbon fiber nonwoven fabric are immobilized by the thermosetting resin having a substantially spherical shape of 40 μm to 300 μm in diameter.

[2] The fiber-reinforced resin molded body according to [1], wherein the contact points of the carbon fibers constituting the carbon fiber nonwoven fabric are covered with a binder resin and the thermosetting resin in the order mentioned.
[3] The fiber-reinforced resin molded body according to [1] or [2], wherein either of a melting point and a glass transition temperature of the binder resin, whichever higher, is equal to or higher than a curing temperature of the thermosetting resin.
[4] The fiber-reinforced resin molded body according to any one of [1] to [3], wherein the thermosetting resin contains at least one thermosetting resin selected from the group consisting of epoxy resins, phenol resins, unsaturated polyester resins, and vinyl ester resins.
[5] The fiber-reinforced resin molded body according to any one of [1] to [4], wherein the binder resin contains a resin formed of a polymer having at least one functional group selected from the group consisting of an amino group, a carboxyl group, an acid anhydride group, an epoxy group, an imino group, an aryl group, a ketone group, and an isocyanate group.
[6] The fiber-reinforced resin molded body according to any one of [1] to [5], wherein the carbon fiber nonwoven fabric contains carbon fibers having a fiber length of 25 mm to 50 mm in a range of 1% by mass or more but less than 50% by mass, and carbon fibers having a fiber length of 0.1 mm or more but less than 25 mm in a range of more than 50% by mass.
[7] The fiber-reinforced resin molded body according to any one of [1] to [5], wherein the carbon fiber nonwoven fabric is composed of aggregates of 100 or more but less than 1,000 carbon fiber filaments, and aggregates of 1 or more but less than 100 carbon fiber filaments.
[8] The fiber-reinforced resin molded body according to any one of [1] to [5], wherein the carbon fiber nonwoven fabric is composed of discontinuous carbon fibers dispersed in filament units.
[9] The fiber-reinforced resin molded body according to any one of [1] to [8], having a length of 0.1 m to 5 m and a width of 0.1 m to 1.5 m.
[10] A structural member including the fiber-reinforced resin molded body according to any one of [1] to [9], to which a bending load is mainly applied.
[11] A structural member for a mobile object, including the fiber-reinforced resin molded body according to [9].
[12] A structural member for a flying object, including the fiber-reinforced resin molded body according to [9].
[13] A panel member for acoustic control, in which a surface material is the fiber-reinforced resin molded body according to [1].
[14] A method of producing a fiber-reinforced resin molded body, the method including the following steps in the order mentioned:
Preform forming step: the step of forming a preform including a carbon fiber nonwoven fabric in a molding die;

Injection preparation step: the step of forming a closed space in which the preform is arranged;
Injection step: the step of injecting a liquid thermosetting resin into the closed space;
Porosity adjustment step: the step of allowing the carbon fiber nonwoven fabric to expand in the thickness direction; and
Curing step: the step of maintaining a temperature equal to or higher than a curing temperature of the thermosetting resin.

[15] The method of producing a fiber-reinforced resin molded body according to [14], wherein, in the injection preparation step, the carbon fiber nonwoven fabric is adjusted to have a porosity of 80% by volume to 97% by volume in the closed space.
[16] The method of producing a fiber-reinforced resin molded body according to [14] or [15], wherein, in the porosity adjustment step, the preform injected with the liquid thermosetting resin is adjusted to have a porosity of 10% by volume to 97% by volume.

[17] The method of producing a fiber-reinforced resin molded body according to any one of [14] to [16], wherein, in the injection step, the liquid thermosetting resin is injected after being adjusted to have a viscosity of 1 mPa·s to 1,000 mPa·s.

[18] The method of producing a fiber-reinforced resin molded body according to any one of [14] to [17], wherein, in the porosity adjustment step, the thickness of the preform is adjusted by controlling the pressure inside the closed space.

[19] The method of producing a fiber-reinforced resin molded body according to [18], wherein, in the porosity adjustment step, the thickness of the preform is adjusted by inducing the carbon fiber nonwoven fabric to spring-back and expand through relaxation of the pressure inside the closed space.

[20] The method of producing a fiber-reinforced resin molded body according to any one of [14] to [19], wherein the curing step does not involve pressurization of the preform.

[21] The method of producing a fiber-reinforced resin molded body according to any one of [14] to [19], further including the pressurization step of pressurizing the preform after the injection step but before the curing step.

[22] The method of producing a fiber-reinforced resin molded body according to any one of [14] to [19], wherein, in the preform forming step, a preform in which a reinforcing fiber substrate other than the carbon fiber nonwoven fabric is further laminated as an outermost layer is arranged.

Advantageous Effects of Invention

According to the fiber-reinforced resin molded body of the present invention, a lightweight and highly rigid molded article can be obtained. Further, by the method of producing a fiber-reinforced resin molded body according to the present invention, the productivity of a fiber-reinforced resin molded body including a carbon fiber nonwoven fabric and a thermosetting resin can be improved. Description of Embodiments

The fiber-reinforced resin molded body of the present invention will now be described in detail.

The present invention provides a fiber-reinforced resin molded body that has continuous voids and includes a carbon fiber nonwoven fabric and a thermosetting resin. In this fiber-reinforced resin molded body, the continuous voids have a porosity of 50% by volume to 97% by volume, and contact points of discontinuous carbon fibers constituting the carbon fiber nonwoven fabric are immobilized by the thermosetting resin having a substantially spherical shape of 40 $\mu$m to 300 $\mu$m in diameter.

The term "carbon fiber nonwoven fabric" used herein refers to a form in which strands and/or monofilaments of discontinuous carbon fibers are planarly dispersed, and examples thereof include a chopped strand mat, a continuous strand mat, a papermaking mat, a carding mat, and an air-laid mat.

In order to not only satisfy the lightweightness and the mechanical properties of the desired fiber-reinforced resin molded body, but also inhibit a defect at the time of removing the molded body from a molding die after a molding process and thereby improving the productivity, the continuous voids have a porosity in a range of 50% by volume to 97% by volume. When the porosity of the continuous voids is less than 50% by volume, the strength of the fiber-reinforced resin can be improved; however, it is difficult to attain the lightweightness that is an object of the fiber-reinforced resin molded body of the present invention. Meanwhile, when the porosity of the continuous voids is higher than 97% by volume, an extremely lightweight fiber-reinforced resin molded body can be obtained; however, a defect is likely to occur during handling in the production, particularly at the time of removing the molded body from a molding die, and this deteriorates the yield, making it difficult to improve the productivity. From the standpoint of satisfying the strength, the rigidity, and the lightweightness of the fiber-reinforced resin molded body, the porosity of the continuous voids is preferably 60% by volume to 90% by volume and, from the standpoint of obtaining a particularly excellent balance of the strength, the rigidity, and the lightweightness, the porosity of the continuous voids is preferably 65% by volume to 80% by volume.

In the fiber-reinforced resin molded body of the present invention, contact points of discontinuous carbon fibers constituting the carbon fiber nonwoven fabric are immobilized by the thermosetting resin having a substantially spherical shape of 40 $\mu$m to 300 $\mu$m in diameter. When the diameter of the thermosetting resin immobilizing the contact points of the carbon fibers is in the above-described range, voids formed by overlapping of the carbon fibers can have an appropriate size, so that the fiber-reinforced resin molded body can be provided with uniform mechanical properties. This is because destruction of the contact points contributes to maintaining the mechanical properties represented by strength of the fiber-reinforced resin molded body. From the standpoint of the uniformity of the mechanical properties at a fine size in the fiber-reinforced resin, the size of the thermosetting resin having a substantially spherical shape is more preferably 100 $\mu$m to 200 $\mu$m in diameter. The term "substantially spherical shape" used herein refers to an irregular spherical shape having a circularity of less than 1.

The substantially spherical shape of the thermosetting resin is determined by the following method. The fiber-reinforced resin molded body is cut out into a test piece of 10 mm in length and 10 mm in width. This test piece is observed under a scanning electron microscope (SEM) in each of the out-of-plane direction and the in-plane direction, and 10 arbitrary spots are photographed at a magnification of ×200. In the thus obtained image, a circumscribed circle is drawn on the thermosetting resin arranged at each contact point of carbon fibers, and the major axis and the minor axis are measured, after which the ratio of the thus measured major axis and minor axis is determined and, when this ratio is 1.03 or higher, the thermosetting resin is defined to have a substantially spherical shape. It is noted here that, when drawing the circumscribed circle, the thermosetting resin is taken as an aggregate, and the thermosetting resin on the surface of carbon fibers protruding from this aggregate is not included in the circumscribed circle.

The thermosetting resin that immobilizes the discontinuous carbon fibers of the present invention at their intersections is capable of maintaining a shape by immobilizing the carbon fibers at their intersections in both of the in-plane direction and the out-of-plane direction; therefore, by allowing the thermosetting resin to have a substantially spherical shape in both of the out-of-plane direction or the in-plane direction, the size of the voids can be made appropriate, and the fiber-reinforced resin molded body can be provided with uniform mechanical properties.

The contact points of the carbon fibers constituting the carbon fiber nonwoven fabric are preferably covered with a binder resin and the above-described thermosetting resin in the order mentioned. This is because, since the binder resin applied to the carbon fiber nonwoven fabric is selected from the standpoint of the affinity between the thermosetting resin serving as a matrix resin and the carbon fiber surface, the strength of the fiber-reinforced resin molded body can be maintained by enabling to take full advantage of the affinity and inhibit peeling at the interface of the carbon fibers and the thermosetting resin. In the above-described covered state, the binder resin covers the entire circumference of the carbon fibers, and the circumference of the binder resin is further covered with the thermosetting resin; however, it is not necessarily required that all of the carbon fibers be covered with the binder resin and the thermosetting resin in this order, and the carbon fibers may be covered to an extent that the desired strength can be maintained. Accordingly, it is preferred that 50% or more of the circumference of the carbon fibers excluding the cut surface be covered and, in order to allow the effect to be exerted more prominently, the coverage is preferably 90% or more.

The contact points of the carbon fibers are immobilized with the binder resin, and this means that, at overlapping parts of single or bundled carbon fibers and carbon fibers adjacent thereto, the binder resin functions as an adhesive to hold the carbon fibers together. Examples of such an immobilized state include a state where the contact points are covered with the binder resin, and a state where the binder resin is aggregated at the contact points. When the binder resin is in the form of fibers, the binder resin may be entangled with the carbon fibers at the contact points. In order to efficiently immobilize the contact points of the carbon fibers and thereby improve the reinforcing efficiency of the fiber-reinforced resin molded body, the contact points are preferably immobilized in a covered state.

By applying a binder resin to the carbon fiber nonwoven fabric, the ease of handling in the preform arrangement step in the production process is improved. Particularly, in the use of the carbon fiber nonwoven fabric to which a binder resin whose melting point or glass transition temperature, whichever higher, is equal to or higher than the curing temperature of the below-described thermosetting resin is applied, the binder resin is not melted or eliminated at an injection temperature in the case of injecting the thermosetting resin into the carbon fiber nonwoven fabric in which the binder resin is incorporated, or at a molding temperature in the case of molding a fiber-reinforced resin molded body; therefore, when the thermosetting resin exhibits a crosslinking reaction or a vulcanization reaction, not only this reaction can be prevented from being hindered, but also deformation of the carbon fiber nonwoven fabric at the time of injecting the resin can be inhibited. More specifically, in the carbon fiber nonwoven fabric to which a binder resin whose melting point or glass transition temperature, whichever higher, is 60°C or higher is applied, the occurrence of breakage, hole generation, and the like that are caused by the injection pressure in the injection step or the flow of the resin during the injection can be inhibited, which is preferred.

From the standpoint of maintaining the form of the carbon fiber nonwoven fabric by the flow of a resin, which later serves as a matrix, during impregnation of the resin, it is preferred that either of the melting point and the glass transition temperature of the binder resin, whichever higher, be equal to or higher than the curing temperature of the thermosetting resin.

From the standpoint of the affinity between the thermosetting resin serving as a matrix resin and the carbon fiber surface, the binder resin applied to the carbon fiber nonwoven fabric is preferably a resin that contains a polymer having a reactive functional group, more preferably a resin that contains a polymer having at least one functional group selected from the group consisting of an amino group, a carboxyl group, an acid anhydride group, an epoxy group, an imino group, an aryl group, a ketone group, and an isocyanate group. The binder resin is particularly preferably a polymer having an acid anhydride group. Specific examples of the binder resin include: thermoplastic resins, such as polyvinyl alcohols, ethylene-propylene copolymers, ethylene-vinyl acetate copolymers, polyvinyl chloride, polyvinylidene chloride, polyvinyl acetate, polycarbonate resins, styrene-based resins, polyamide-based resins, polyester-based resins, polyphenylene sulfide resins, modified polyphenylene ether resins, polyacetal resins, polyether imide resins, polypropylene resins, polyethylene resins, polyethyleneimine resins, fluororesins, thermoplastic acrylic resins, thermoplastic polyester resins, thermoplastic polyamide imide resins, acrylonitrile-butadiene copolymers, styrene-butadiene copolymers, and acrylonitrile-styrene-butadiene copolymers; compounds serving as precursors of polyimide resins, such as polyamic acids, polyamic acid salts, polyamic acid esters, polyhydroxyamides, and polyaminoamides; and thermosetting resins, such as urethane resins, melamine resins, urea resins, thermosetting acrylic resins, phenol resins, epoxy resins, and thermosetting polyesters.

As a method of applying the binder resin to the carbon fiber nonwoven fabric, a method of applying the binder resin in the form of an aqueous solution or an emulsion to the carbon fiber nonwoven fabric by curtain coating, dipping, immersion, or the like, and subsequently drying water and solvent components is preferred not only from the standpoint of improving the ease of handling of the carbon fiber nonwoven fabric and the mechanical properties when the carbon fiber nonwoven fabric is made into a fiber-reinforced resin molded body, but also because the binder resin is likely to be uniformly applied to the carbon fiber nonwoven fabric, making it easy to perform the step of applying the binder resin. When the binder resin is in the form of particles or fibers or in other non-liquid form, examples the method of applying the binder resin include: a method of mixing the binder resin into the carbon fiber nonwoven fabric; a method of blending the binder resin into the carbon fiber nonwoven fabric by spraying or the like; and a method of impregnating the binder resin into the carbon fiber nonwoven fabric by applying a pressure in a state where the binder resin is melted or heated to its softening temperature or higher. These methods are preferred from the standpoint of not only improving the ease of handling of the carbon fiber nonwoven fabric, but also allowing the use of a solvent-insoluble resin and thus expanding the range of options.

From the standpoint of improving the ease of handling of the carbon fiber nonwoven fabric as well as from the standpoint of improving the affinity between the thermosetting resin and the carbon fibers, the content of the binder resin is preferably 5 parts by mass to 25 parts by mass with respect to 100 parts by mass of the carbon fiber nonwoven fabric. When the content of the binder resin is 5 parts by mass or more with respect to 100 parts by mass of the carbon fiber nonwoven fabric, the carbon fiber nonwoven fabric has excellent ease of handling and exhibits excellent affinity between the thermosetting resin and the carbon fibers, while when the content of the binder resin is 25 parts by mass or less, the binder resin does not interfere with the penetration path of the thermosetting resin in the case of injecting the thermosetting resin into the carbon fiber nonwoven fabric, making it easy to inject the resin for obtaining a fiber-reinforced resin molded body.

The fiber-reinforced resin molded body of the present invention can be easily obtained at a relatively large thickness by using a thermosetting resin as a matrix resin. In other words, when a thermoplastic resin is used, an increase in the product thickness tends to prolong the solidification time and thus extend the production time; however, the use of a thermosetting resin enables to control the production time based on the curing time of the thermosetting resin, so that a fiber-reinforced resin molded body can be obtained in a short time.

Examples of the thermosetting resin include unsaturated polyester resins, vinyl ester resins, epoxy resins, phenol resins, urea resins, melamine resins, polyimide resins, cyanate ester resins, bismaleimide resins, benzoxazine resins, copolymers and modified products of these resins, and resins in which at least two of these resins are blended. In order to improve the impact resistance, an elastomer or a rubber component may be added to the thermosetting resin. Among the above-exemplified resins, an epoxy resin is preferred since it is excellent in mechanical properties, heat resistance, and adhesion with carbon fibers.

Examples of the epoxy resins include: bisphenol-type epoxy resins, such as bisphenol A-type epoxy resins, bisphenol F-type epoxy resins, bisphenol AD-type epoxy resins, and bisphenol S-type epoxy resins; brominated epoxy resins, such as tetrabromobisphenol A diglycidyl ether; epoxy resins having a biphenyl skeleton; epoxy resins having a naphthalene skeleton; epoxy resins having a dicyclopentadiene skeleton; novolac-type epoxy resins, such as phenol-novolac epoxy resins and cresol-novolac epoxy resins; glycidylamine-type epoxy resins, such as *N,N,O*-triglycidyl-*m*-aminophenol, *N,N,O*-triglycidyl-*p*-aminophenol, *N,N,O*-triglycidyl-4-amino-3-methylphenol, *N,N,N',N'*-tetraglycidyl-4,4'-methylenedianiline, *N,N,N,N*-tetraglycidyl-2,2'-diethyl-4,4'-methylenedianiline, *N,N,N',N'*-tetraglycidyl-*m*-xylylenediamine, *N,N*-diglycidylaniline, and *N,N*-diglycidyl-*o*-toluidine; resorcin diglycidyl ether; and triglycidyl isocyanurate.

Examples of a curing agent of the epoxy resin include dicyandiamides, aromatic amine compounds, phenol novolac resins, cresol novolac resins, polyphenol compounds, imidazole derivatives, tetramethylguanidine, thiourea-added amines, carboxylic acid hydrazides, carboxylic acid amides, and polymercaptans.

Further, it is preferred that thermosetting resin reach a degree of curing of 80% within 10 minutes at a curing temperature, since this can shorten the molding time, attaining an excellent economic efficiency of the production method.

The degree of curing of the thermosetting resin is a value calculated by the following equation using the area of each peak, which appears as an exothermic reaction in differential scanning calorimetry performed under an inert gas atmosphere at a heating rate of 10°C/min, as the calorific value of each of the thermosetting resin composition before curing and a cured product of the thermosetting resin:

Degree of curing (%) = ((Caloric value of composition containing thermosetting resin before curing) - (Caloric value of cured product of thermosetting resin))/(Caloric value of composition containing thermosetting resin before curing) × 100

The thermosetting resin composition reaching a degree of curing of 80% within 10 minutes at a curing temperature is not particularly limited, and examples thereof include: bisphenol A-type epoxy resins; bisphenol F-type epoxy resins; bisphenol S-type epoxy resins; biphenyl-type epoxy resins; naphthalene-type epoxy resins; novolac-type epoxy resins; epoxy resins having a fluorene skeleton; epoxy resins obtained using a copolymer of a phenol compound and dicyclopentadiene as a raw material; glycidyl ether-type epoxy resins, such as diglycidyl resorcinol, tetrakis(glycidyloxyphenyl)ethane, and tris(glycidyloxyphenyl)methane; and glycidylamine-type epoxy resins, such as tetraglycidyl diaminodiphenylmethane, triglycidyl aminophenol, triglycidyl aminocresol, and tetraglycidyl xylenediamine. These epoxy resins may be used singly, or in combination of plural kinds thereof.

When the thermosetting resin composition is an epoxy resin composition, examples of the curing agent include compounds such as dicyandiamides, aromatic amines, aliphatic amines, hydrazides, aromatic ureas, imidazoles, and Lewis acid complexes. Among these curing agents, aromatic amines and dicyandiamides can be preferably used since these compounds allow the resulting fiber-reinforced resin molded body to have excellent mechanical properties.

From the standpoint of improving the reinforcing efficiency of the fiber-reinforced resin molded body as well as from the standpoint of obtaining the fiber-reinforced resin molded body with excellent lightweightness by allowing efficient formation of voids in the fiber-reinforced resin molded body, it is preferred that the carbon fiber nonwoven fabric contain carbon fibers having a fiber length of 25 mm to 50 mm in a range of 1% by mass or more but less than 50% by mass, and carbon fibers having a fiber length of 0.1 mm or more but less than 25 mm in a range of more than 50% by mass. The term "fiber length" used herein means a number-average fiber length. When the carbon fiber nonwoven fabric contains carbon fibers having a fiber length of 25 mm to 50 mm in a range of 1% by mass or more but less than 50% by mass, the presence of relatively long fibers effectively works to improve the reinforcing efficiency of the fiber-reinforced resin molded body. When the carbon fiber nonwoven fabric contains carbon fibers having a fiber length of 0.1 mm or more but less than 25 mm in a range of more than 50% by mass, voids can be efficiently formed inside the fiber-reinforced resin molded body during its production.

In the above-described fiber length range of 0.1 mm or more but less than 25 mm, the number-average fiber length of discontinuous carbon fibers constituting the carbon fiber nonwoven fabric is more preferably 2 to 25 mm from the standpoint of further improving the reinforcing efficiency of the fiber-reinforced resin molded body, still more preferably 1 to 15 mm from the standpoint of efficiently forming voids attributed to the carbon fibers in the fiber-reinforced resin molded body and thereby reducing the density.

The carbon fiber nonwoven fabric is preferably composed of aggregates of 100 or more but less than 1,000 carbon fiber filaments, and aggregates of 1 or more but less than 100 carbon fiber filaments. By incorporating aggregates of 100 or more but less than 1,000 carbon fiber filaments, the tensile strength of the carbon fibers in the fiber-reinforced resin molded body can be sufficiently utilized, so that the reinforcing efficiency can be improved. By incorporating aggregates of 1 or more but less than 100 carbon fiber filaments, voids can be efficiently formed in the fiber-reinforced resin molded body, so that the density can be reduced. The content ratio of the aggregates of 100 or more but less than 1,000 carbon fiber filaments and the aggregates of 1 or more but less than 100 carbon fiber filaments can be adjusted based on the ratio of the reinforcing efficiency and the porosity of the fiber-reinforced resin molded body to be obtained. From the standpoint of forming voids in the fiber-reinforced resin molded body for the purpose of improving the lightweightness as well as from the standpoint of uniformly distributing the thermosetting resin used as a matrix resin during the production of the fiber-reinforced resin molded body, the carbon fiber nonwoven fabric preferably contains the latter aggregates of 1 or more but less than 100 carbon fiber filaments at a higher weight ratio.

The carbon fiber nonwoven fabric is preferably composed of discontinuous carbon fibers dispersed in filament units. In this case, gaps can be efficiently generated by the carbon fibers in the carbon fiber nonwoven fabric, so that voids can be efficiently formed during the step of adjusting the porosity in the production of a fiber-reinforced resin molded body. Therefore, a lightweight fiber-reinforced resin molded body can be easily obtained. The phrase "discontinuous carbon fibers dispersed in filament units" used herein means that, in the carbon fiber nonwoven fabric, the amount of bundles in which two or more carbon fiber monofilaments are in contact and parallel to each other is less than 20%.

Further, in the carbon fiber nonwoven fabric, it is desired that the discontinuous carbon fibers be randomly dispersed. This allows the carbon fiber nonwoven fabric to easily conform to a complex shape when shaped with an application of external force thereto. On the other hand, when the carbon fibers of the carbon fiber nonwoven fabric are directionally dispersed, the strength and the elastic modulus in the orientation direction of the fibers can be increased. Therefore, when directionality is required for the strength and the elastic modulus in terms of the design of a product formed of the fiber-reinforced resin molded body, it is preferred to allow the carbon fibers to be oriented in the desired direction.

In the present invention, it is preferred to use a carbon fiber nonwoven fabric in which the amount of carbon atoms per unit area (hereinafter, referred to as "area weight") is 50 g/m$^2$ or more since this makes it no longer necessary to laminate a large amount of carbon fiber nonwoven fabric in the preform forming step. In addition, the drapability of the carbon fiber nonwoven fabric is likely to be improved, and this leads to good formability; therefore, product defects can be reduced when the carbon fiber nonwoven fabric is made into a fiber-reinforced resin molded body. The area weight of the carbon fiber nonwoven fabric used in a preform is preferably 2,000 g/m$^2$ or less from the standpoint of the ease of handling, the formability, and optimization of the number of nonwoven fabrics to be laminated; more preferably 500 g/m$^2$ or less from the standpoint of the ease of handling of the carbon fiber nonwoven fabric; and still more preferably 200 g/m$^2$ or less from the standpoint of the ease of lamination in the preform forming step.

The fiber-reinforced resin molded body of the present invention can easily yield a lightweight and thick molded article by the below-described production method, and is thus useful for improving the rigidity. Therefore, the fiber-reinforced resin molded body of the present invention can be suitably used as a structural member to which bending loads are mainly applied. Taking advantage of its lightweightness and rigidity, the fiber-reinforced resin molded body of the present invention is preferably used as a structural member for a flying object, such as an airplane, an artificial satellite, a UAM (Urban Air Mobility), or a drone, or as a structural member for a mobile object, such as an automobile, a railway vehicle, or a ship. This is because, in these applications, the fuel efficiency is expected to be improved by the lightweightness. Further, taking advantage of its lightweightness and voids, the fiber-reinforced resin molded body of the present invention can be suitably used for civil engineering and construction members, electronic equipment casings, sporting goods, and the like. Among these applications, the fiber-reinforced resin molded body of the present invention can be suitably used as a panel member for indoor and outdoor acoustic control since it is excellent in workability because of its low actual weight attributed to the lightweightness and contains a large amount of continuous voids.

Particularly, the fiber-reinforced resin molded body preferably has a length of 0.1 m to 5 m and a width of 0.1 m to 1.5 m since this enables to take full advantage of the voids of the carbon fiber nonwoven fabric in the above-described members, and allows rapid impregnation of the thermosetting resin due to its low viscosity. By controlling the size to be in this preferred range, in the production of a large structural member or a panel-like member as a product, not only the step of joining the fiber-reinforced resin molded body with one another, which is performed due to insufficient length or width, can be simplified, but also a reduction in the strength of joints can be inhibited.

The method of producing a fiber-reinforced resin molded body according to the present invention will now be described in detail.

<Preform Forming Step>

The preform forming step is the step of forming a preform containing a carbon fiber nonwoven fabric in a molding die.

A preform may be formed by, for example, arranging a carbon fiber nonwoven fabric in a molding die in accordance with the desired shape. As the molding die, a double-sided die consisting of an upper die and a lower die can be used. The material of the molding die is not particularly limited and, taking into consideration the thermal conductivity and the hardness, the material may be selected as appropriate from aluminum, iron-based materials, and the like, or gypsum or a silicone material may be used from the standpoint of economic efficiency. The molding die is provided with a resin flow path system consisting of a resin inlet, a resin injection runner, a molded product-shaped cavity, and a resin outlet vent. It is preferred that multiple resin flow grooves connected to one or both of the runner and the vent be formed on a part or the entirety of the inner surface of the molding die that is in contact with the cavity, since this enables to uniformly inject and impregnate a thermosetting resin into the carbon fiber nonwoven fabric. Further, from the standpoint of inhibiting misalignment at the time of injecting the thermosetting resin into the carbon fiber nonwoven fabric, the molding die may have a die clamping mechanism. The die clamping mechanism is not particularly limited as long as it can withstand the resin injection pressure, and examples thereof include means that use a hydraulic pressure, an air, a water pressure, a vacuum pressure, a bolt, or a clamp, and means that increase the weight of the upper die itself.

It is also useful to cover the molding die with a film (e.g., use only the lower die as a molding die and cover the upper surface thereof with a film) and fix the carbon fiber nonwoven fabric in the shape of the lower die, since this enables to not only reduce the cost of the molding die, but also reduce placement errors during the production by making it easy to fix a shape as the film conforms to the carbon fiber nonwoven fabric.

The carbon fiber nonwoven fabric has excellent strength, elastic modulus, and lightweightness; therefore, by using a preform that contains the carbon fiber nonwoven fabric, a fiber-reinforced resin molded body inheriting these properties can be obtained. In addition, since the carbon fiber nonwoven fabric is flexible, it can be easily shaped into a desired shape. Further, in the case of performing the porosity adjustment step at the time of the below-described thermosetting resin injection step, the thickness can be easily adjusted because of the flexibility (cushioning property) attributed to the nonwoven fabric.

Examples of a method of arranging the carbon fiber nonwoven fabric at the time of forming a preform in the molding die include a method of cutting the carbon fiber nonwoven fabric in conformity to the shape of the molding die, and a method of arranging the carbon fiber nonwoven fabric in a size fitting the projected area of the molding die. In the preform forming step, by appropriately changing the lamination amount and the lamination direction in accordance with the fiber content and the shape of the fiber-reinforced resin molded body to be obtained, a fiber-reinforced resin molded body that is more in line with the intended purpose can be obtained.

In the preform forming step, it is also preferred to arrange a preform in which a reinforcing fiber substrate other than the carbon fiber nonwoven fabric is further laminated as an outermost layer. Examples of this reinforcing fiber substrate other than the carbon fiber nonwoven fabric include: carbon fiber fabrics; unidirectionally arranged carbon fiber bundles; unidirectional carbon fiber fabrics in which unidirectionally arranged carbon fiber bundles are immobilized by suture threads or the like; and nonwoven fabrics formed of fiber species other than carbon fibers, such as fabrics formed of glass fibers or aramid fibers. The term "fabric" used herein refers to a material having a regular structure composed of continuous reinforcing fibers, and examples thereof include a plain-woven fabric, a satin-woven fabric, and a twill-woven fabric. The term "nonwoven fabric" used herein refers to a form in which discontinuous reinforcing fibers are planarly dispersed, and examples thereof include a chopped strand mat, a continuous strand mat, a papermaking mat, a carding mat, and an air-laid mat. In the fiber-reinforced resin molded body to be obtained, it is preferred to adjust the lamination direction of these materials as appropriate in accordance with the intended purpose of, for example, providing the strength with a specific directionality, or making the properties as isotropic as possible.

<Injection Preparation Step>

The injection preparation step is the step of forming a closed space in which the preform formed in the molding die is arranged. In this injection preparation step, it is preferred to further adjust the carbon fiber nonwoven fabric to be in a state of having a porosity of 80% by volume to 97% by volume in the closed space.

Further, the preform may be enclosed by a film, the molding die, or the like after being arranged in the molding die. By enclosing the preform in the closed space, the thermosetting resin is prevented from leaking out of the system at the time of injecting the thermosetting resin in the below-described injection step, so that the thermosetting resin can be surely injected in a prescribed amount. Accordingly, a change in the amount of the carbon fiber nonwoven fabric and that of the thermosetting resin in the resulting fiber-reinforced resin molded body can be inhibited, so that a fiber-reinforced resin molded body containing the thermosetting resin in an amount as designed can be obtained. In the case of using a double-sided molding die, the closed space is formed by closing its upper die and lower die. Alternatively, as described above, the closed space may be formed by using only the lower die as a molding die and covering the upper surface thereof with a film. It is noted here that a state in which such a closed space is formed may be hereinafter expressed as "sealed".

The film used for sealing is preferably stretchy and highly heat resistant such that melting and hole generation caused by heating in the below-described curing step do not occur, and a film containing a polyamide, a polyester, or a polyimide as a main component can be preferably used. Generally, a polyamide film or a polyester film can be used from the standpoint of inhibiting the hole generation by elongation attributed to the film, and preventing the leakage of the thermosetting resin. From the standpoint of heat resistance, a polyimide film can be preferably used in the environment of the curing step where the temperature exceeds 200°C. The thickness of the film may be selected as appropriate in accordance with the shape to be formed; however, generally, the thinner and the stretchier the film, the more improved is the formability.

Further, by adjusting the porosity of the carbon fiber nonwoven fabric to be 80% by volume or more in the thermosetting resin injection preparation step, the voids in the carbon fiber nonwoven fabric can be sufficiently utilized as flow paths when the thermosetting resin is injected. In other words, since the thermosetting resin can be injected without causing an excessive increase in the flow resistance of the thermosetting resin permeating into the carbon fiber nonwoven fabric, the injection time of the thermosetting resin can be shortened. From the standpoint of increasing the injection rate of the thermosetting resin and improving the productivity (production rate), it is more preferred to adjust the porosity of the carbon fiber nonwoven fabric to be 90% by volume or more. An upper limit of the porosity of the carbon fiber nonwoven fabric is preferably 97% by volume or less, taking into consideration the possibility that the carbon fiber nonwoven fabric is deformed by the flow of the thermosetting resin. In the case of using a double-sided molding die, the porosity of the carbon fiber nonwoven fabric can be calculated from the volume relationship between the cavity of the molding die and the carbon fiber nonwoven fabric introduced thereto. When the carbon fiber nonwoven fabric is in a state of being pressurized by the double-sided molding die, or being sealed with a film and thereby compressed, the porosity of the carbon fiber nonwoven fabric can be adjusted by weakening the pressurizing force or giving leeway to the film to create a space.

In the injection preparation step, it is preferred to perform a depressurization operation to adjust the degree of vacuum of the thus formed closed space to be -0.08 MPa to -0.1 MPa. By this depressurization step, the injection of the thermosetting resin is assisted by a pressure difference between the atmospheric pressure and vacuum, so that the injection pressure of the thermosetting resin can be reduced. The degree of vacuum is more preferably -0.09 MPa to -0.1 MPa since, by maintaining a high degree of vacuum, not only an effect that the assisting capacity in the injection of the thermosetting resin is improved and the injection step is thereby made easier can be obtained, but also the excess resin discharge capacity is improved and this can make it easier to adjust the resin amount.

<Injection Step>

The injection step is the step of injecting a liquid thermosetting resin into the closed space which has been formed in the injection preparation step and in which the preform has been arranged. By using a liquid thermosetting resin, a relatively thick fiber-reinforced resin molded body can be easily obtained. In other words, when a thermoplastic resin is used, an increase in the product thickness tends to prolong the solidification time and thus extend the production time;

however, the use of a thermosetting resin enables to control the production time based on the curing time of the thermosetting resin, so that a fiber-reinforced resin molded body can be obtained in a short time.

In the injection step, it is preferred to inject an uncured thermosetting resin into the closed space using an external force generated by an injection machine, a vacuum pump, or the like. The injection pressure is not limited as long as the thermosetting resin can be injected into the carbon fiber nonwoven fabric through a runner or hose of the molding die; however, from the standpoint of inhibiting an increase in the size of the equipment, the injection is preferably performed in a range of 0.3 MPa to 10 MPa. The injection pressure is more preferably in a range of 0.3 MPa to 5 MPa since this can inhibit the deformation of the carbon fiber nonwoven fabric caused by the injection pressure, and the resulting fiber-reinforced resin molded body can thus be prevented from being a defective product due to unexpected deformation.

In the injection step, it is preferred to adjust the viscosity of the liquid thermosetting resin to be 1 mPa·s to 1,000 mPa·s since this allows a reduction of the injection pressure. Further, when the viscosity of the liquid thermosetting resin is in a range of 1 mPa·s to 500 mPa·s, since the thermosetting resin has a low viscosity, breakage of the carbon fiber nonwoven fabric itself, which is caused by the flow resistance of the thermosetting resin passing through the carbon fiber nonwoven fabric, is more likely to be avoided. The viscosity of the thermosetting resin may be adjusted by either a method of heating the thermosetting resin or a method of adjusting the composition of the thermosetting resin itself.

<Porosity Adjustment Step>

In the production method of the present invention, the porosity adjustment step is the step of allowing the carbon fiber nonwoven fabric to expand in the thickness direction after the injection step but before the curing step. In this step, it is preferred to adjust the preform injected with the thermosetting resin to have a porosity of 10% by volume to 97% by volume. By this, the weight of the resulting fiber-reinforced resin molded body can be controlled. In the porosity adjustment step, it is typically preferred to adjust the thickness of the preform injected with the thermosetting resin by controlling the pressure inside the closed space enclosing the preform. By this, the porosity can be adjusted. Specifically, for example, a method of adjusting the clearance of the molding die using a jig such as a spacer, or a method of inducing the carbon fiber nonwoven fabric to spring-back and expand by releasing the pressure inside the closed space may be employed. The porosity of the preform after the adjustment is not particularly limited as long as the lightweightness and the mechanical properties of the desired fiber-reinforced resin molded body are satisfied, and a defect does not occur at the time of removing the molded body from the molding die; however, from the standpoint of the balance of these features, the porosity of the preform after the adjustment is more preferably 50% by volume to 80% by volume.

Particularly, a method of adjusting the thickness of the preform by inducing the carbon fiber nonwoven fabric to spring-back and expand through relaxation of the pressure inside the closed space is preferred since it does not require to add the step of, for example, adding a third component that facilitates the expansion of the resulting fiber-reinforced resin molded body, or to examine the curing temperature in the curing step, the use temperature of the third component, and the like, so that the production can be made easy.

It is noted here that this step can be replaced by operations of adjusting the preform to have a prescribed thickness in advance before the injection step and injecting the thermosetting resin in this state. According to this method, since the thermosetting resin is injected into the preform whose thickness has been adjusted, the thermosetting resin can be injected in a state where there is a sufficient space between the preform and the cavity of the molding die, so that the thermosetting resin can easily permeate into the preform.

<Pressurization Step>

The production method of the present invention preferably also includes, after the injection step but before the below-described curing step, the pressurization step of further pressurizing the preform to allow the thermosetting resin to uniformly permeate into the carbon fiber nonwoven fabric. The pressurization time and the pressure of the substrate in the pressurization step can be determined as appropriate in accordance with the state of the permeation of the thermosetting resin into the substrate and the carbon fiber nonwoven fabric. From the standpoint of attaining uniform permeation of the thermosetting resin into the resulting fiber-reinforced resin molded body, it is preferred to perform the pressurization at a pressure of 0.5 MPa to 3 MPa. Further, the pressurization time can be adjusted as appropriate; however, from the standpoint of attaining uniform permeation of the thermosetting resin, the pressurization time is preferably in a range of 5 seconds to 60 seconds.

<Curing Step>

The curing step is the step of, after the injection step and the porosity adjustment step, curing the thermosetting resin by maintaining the preform, which is in a state where the thermosetting resin has permeated into the carbon fiber nonwoven fabric, at a temperature equal to or higher than the curing temperature of the thermosetting resin. The preform injected with the thermosetting resin in the injection step yields a fiber-reinforced resin molded body through the curing step.

In the curing step, in order to inhibit a change in shape at the time of removing the resulting fiber-reinforced resin molded body from the molding die, it is preferred to use a thermosetting resin that reaches a degree of curing of 80% within 10 minutes at the curing temperature. This allows the thermosetting resin in the fiber-reinforced resin molded body to sufficiently cure, and defects such as breakage of the fiber-reinforced resin molded can be inhibited at the time of removing the fiber-reinforced resin molded body from the molding die after the completion of the curing step. In addition, since the shape of the fiber-reinforced resin molded body can be surely fixed, product defects such as deformation after the removal from the molding die can be inhibited. The degree of curing is preferably 80% or higher from the standpoint of shape stability; however, the closer the degree of curing to 100%, the more fixed is the shape and the more preferred it is. On the other hand, an increase in the degree of curing requires to maintain the preform in the molding die for a longer period, which generally extends the molding time. Therefore, from the standpoint of productivity, a fiber-reinforced resin molded body can be obtained highly efficiently when the degree of curing is 80% or higher.

The mass content of the carbon fiber nonwoven fabric in the fiber-reinforced resin molded body after the curing step is preferably 30% by mass to 90% by mass, more preferably 35% by mass to 85% by mass, still more preferably 40% by mass to 80% by mass. When the mass content of the carbon fiber nonwoven fabric is 30% by mass or more, since the amount of the thermosetting resin is not excessively large relative to the fibers, the advantages of the fiber-reinforced resin molded body having an excellent balance of lightweightness and mechanical properties are likely to be obtained. In addition, at the time of molding, the amount of the heat generated during the curing is increased, so that defective curing of the thermosetting resin is unlikely to occur. Meanwhile, when the mass content is 90% by mass or less, defective impregnation of the thermosetting resin is unlikely to occur. Therefore, a part not containing the thermosetting resin is unlikely to be formed in the fiber-reinforced resin molded body obtained in the present invention.

Moreover, from the standpoint of the dimensional stability of the resulting molded article, it is preferred that the curing step does not involve pressurization of the preform after the resin injection. The pressure applied in this case refers to a pressure externally applied by a molding machine, resin injection, or the like, which is not attributed to contraction or expansion of a material. Examples of a method of blocking such a pressure include, but not limited to: a method of immobilizing an upper die and a lower die in the case of using a molding die; and a method of releasing depressurization in the case of enclosing the molded article with a film. Examples

The present invention will now be described concretely by way of Examples. The present invention is, however, not limited to the below-described Examples.

[Carbon Fibers]

A copolymer containing polyacrylonitrile as a main component was subjected to spinning, baking, and surface oxidation to obtain continuous carbon fibers having a total of 12,000 filaments. The thus obtained continuous carbon fibers had the following properties.

    Specific gravity: 1.8
    Tensile strength: 4,600 MPa
    Tensile elastic modulus: 220 GPa
    Tensile elongation at break: 2.1%

[Liquid Resins]

• Thermosetting Resin 1

A liquid epoxy resin composition (viscosity at an injection temperature of 60°C: 100 mPa·s), which was obtained by blending 70 parts by weight of a main agent (Ep828, manufactured by Mitsubishi Chemical Group Corporation) with 30 parts by weight of a curing agent (DENACOL EX-211, manufactured by Nagase ChemteX Corporation) and 35 parts by weight of a curing accelerator (ANCAMINE 2049, manufactured by Evonik Japan Co., Ltd.), was used as an epoxy resin.

• Thermosetting Resin 2

A liquid phenol resin composition (viscosity at an injection temperature of 40°C: 150 mPa·s), which was obtained by blending 100 parts by weight of a main agent (BRL-240, manufactured by Aica Kogyo Co., Ltd.) with 12 parts by weight of a curing agent (FRH-50, manufactured by Aica Kogyo Co., Ltd.), was used as a phenol resin.

[Binder Resins]

• Binder Resin 1

A polyamic acid obtained by reacting 4,4'-(4,4'-isopropylidenediphenoxy)bis(phthalic anhydride) as a tetracarboxylic dianhydride with m-phenylenediamine as a diamine compound at a molar ratio of 1:1 was neutralized with N,Ndimethyl-2-aminoethanol as a trialkylamine to obtain a polyamic acid salt.

This compound was diluted with purified water and used as an aqueous solution having a concentration of 10% by mass. It is noted here that a product obtained by reacting this binder resin 1 at 200°C for 60 minutes had a glass transition temperature of 216°C with no melting point.

• Binder Resin 2

A paraffin wax emulsion (manufactured by Meisei Chemical Works, Ltd., melting point: 65°C) was used.

[Carbon Fiber Woven Fabric]

Carbon fibers were parallelly aligned and unidirectionally arranged at a density of 1.2 fibers/cm to obtain a sheet-form reinforcing fiber group. Carbon fibers were also arranged at a density of 1.2 fibers/cm in the direction perpendicular to the thus obtained carbon fiber group to interlace the carbon fibers, and a bidirectional fabric substrate having a 200-g/m$^2$ plain weave structure was formed using a weaving loom.

[Carbon Fiber Nonwoven Fabrics]

• Carbon Fiber Nonwoven Fabric 1

Carbon fibers were cut at a length of 5 mm using a strand cutter to obtain cut carbon fibers. A dispersion composed of water and a surfactant (polyoxyethylene lauryl ether (trade name), manufactured by Nacalai Tesque, Inc.), which had a concentration of 0.1% by mass, was prepared, and a carbon fiber nonwoven fabric was produced using this dispersion and the cut carbon fibers. A production apparatus was equipped with a cylindrical container of 1,000 mm in diameter as a dispersion tank having an opening cock at the bottom, and a linear transport section (inclination angle: 30°) connecting the dispersion tank and a papermaking tank. A stirrer was attached to an opening on the upper surface of this dispersion tank, enabling to load the cut carbon fibers and the dispersion through the opening. The papermaking tank was equipped with a mesh conveyor having a papermaking surface of 500 mm in width on the bottom, and a conveyor capable of transferring the carbon fiber nonwoven fabric was connected to the mesh conveyor. Papermaking was performed at a carbon fiber concentration in the dispersion of 0.05% by mass, and the papermaking conditions were adjusted such that the carbon fibers were dispersed in the form of filaments and isotropically in the in-plane direction. The resulting papermade carbon fiber nonwoven fabric was dried in a 200°C drying furnace for 30 minutes. The thus obtained mat had an area weight of 150 g/m$^2$. The binder resin 1 was applied to this mat, which was then dried again in a 200°C drying furnace for 60 minutes to obtain a carbon fiber nonwoven fabric 1. In this carbon fiber nonwoven fabric 1, carbon fibers in single filament units and 100 carbon fiber bundles were randomly dispersed in an amount of 99% by mass and 1% by mass, respectively.

• Carbon Fiber Nonwoven Fabric 2

A carbon fiber nonwoven fabric 2 was papermade in the same manner as the carbon fiber nonwoven fabric 1, and the binder resin 2 was applied to thereto, which was dried again in a 120°C drying furnace for 60 minutes to obtain a carbon fiber nonwoven fabric 2. In this carbon fiber nonwoven fabric, carbon fibers in single filament units and 100 carbon fiber bundles were randomly dispersed in an amount of 99% by mass and 1% by mass, respectively.

• Carbon Fiber Nonwoven Fabric 3

A carbon fiber nonwoven fabric was papermade in the same manner as the carbon fiber nonwoven fabric 1, except that the carbon fibers were cut into two types, 30 mm and 5 mm, and mixed at a ratio of 30% by mass of 30-mm fibers and 70% by mass of 5-mm fibers. The binder resin 1 was applied to this carbon fiber nonwoven fabric, which was then dried again in a 200°C drying furnace for 30 minutes to obtain a carbon fiber nonwoven fabric 3. In this carbon fiber nonwoven fabric 3, carbon fibers in single filament units and 500 carbon fiber bundles both existed in an amount of 50% by mass, and entanglement of the fibers was noticeable, forming an uneven shape on the surface.

• Carbon Fiber Nonwoven Fabric 4

A carbon fiber nonwoven fabric 4 was papermade in the same manner as the carbon fiber nonwoven fabric 1, except that no binder resin was used. In this carbon fiber nonwoven fabric 4, carbon fibers in single filament units and 100 carbon fiber bundles existed in an amount of 99% by mass and 1% by mass, respectively, and were randomly dispersed.

• Carbon Fiber Nonwoven Fabric 5

A carbon fiber nonwoven fabric 5 was papermade in the same manner as the carbon fiber nonwoven fabric 1, except that the stirring time in the water was shortened such that carbon fiber bundles remained. The binder resin 1 was applied to thereto, which was then dried again in a 200°C drying furnace for 30 minutes to obtain a carbon fiber nonwoven fabric 5. The carbon fibers of the carbon fiber nonwoven fabric 5 contained 30% by mass of aggregates of 600 filaments in arithmetic mean, and 70% by mass of aggregates of 20 filaments.

[Porosity of Continuous Voids in Carbon Fiber Nonwoven Fabric]

The porosity of continuous voids in a carbon fiber nonwoven fabric of interest, which is a volume ratio of voids in the carbon fiber nonwoven fabric, was calculated by the following equation from the thickness, the area weight, and the density of constituents of the carbon fiber nonwoven fabric. The density in this case can be determined in accordance with JIS K0061 (2001).

(Porosity of continuous voids in carbon fiber nonwoven fabric) = {(Thickness [m] of carbon fiber nonwoven fabric) - (Area weight [g/m$^2$] of carbon fiber nonwoven fabric)/(Density of constituents [g/m$^3$] of carbon fiber nonwoven fabric)}/ (Thickness [m] of carbon fiber nonwoven fabric) $\times$ 100 [%]

[Fiber Length of Carbon Fibers in Carbon Fiber Nonwoven Fabric]

From a carbon fiber nonwoven fabric of interest, 400 carbon fibers were randomly extracted, and the length thereof was measured under a light microscope. The number-average fiber length (Ln) calculated by the following equation was defined as the fiber length of the carbon fibers.

$$\text{Number-average fiber length (Ln)} = (\Sigma Li)/Nf$$

Li: measured fiber length (i = 1, 2, 3, ···, n)
Nf: total number of measured fibers

[Bundle State of Carbon Fibers in Carbon Fiber Nonwoven Fabric]

The bundled state of the surface of a carbon fiber nonwoven fabric of interest in the out-of-plane direction was observed under a light microscope, and the length in the direction perpendicular to the fiber extending direction was measured.

[Melting Point or Glass Transition Temperature of Binder Resin]

The melting point was evaluated using a differential scanning calorimeter (DSC). A sealable sample container was filled with 5 mg of a sample and then heated from 30°C to 400°C at a heating rate of 10°C/min to perform the evaluation. As an evaluation device, PYRISL DSC manufactured by PerkinElmer Co., Ltd. was used. For a binder resin whose melting point was difficult to evaluate (a binder resin having no melting point), the glass transition temperature of the binder resin was measured in accordance with JIS K7121 (2012). As the sample of the binder resin, a precursor of the binder resin was heat-treated alone, and the resulting solid component was recovered and used for the evaluation.

[Arrangement of Binder Resin and Thermosetting Resin in Fiber-Reinforced Resin Molded Body]

A fiber-reinforced resin molded body of interest was cut out into a test piece of 10 mm in length and 10 mm in width, a cross-section thereof was observed under a scanning electron microscope (SEM), and 10 arbitrary spots were photographed at a magnification of $\times$3,000. For arbitrary 50 spots in the thus obtained image where cross-sections of carbon fibers were cut, the presence or absence of coverage of the binder resin and the thermosetting resin with the carbon fibers was observed. The observation was made until 50 cross-sections were observed.

[Size of Thermosetting Resin in Fiber-Reinforced Resin Molded Body]

A fiber-reinforced resin molded body of interest was cut out into a test piece of 10 mm in length and 10 mm in width. This test piece was observed under a scanning electron microscope (SEM) in each of the out-of-plane direction and the in-plane direction, and 10 arbitrary spots were photographed at a magnification of ×200. In the thus obtained image, the size of the thermosetting resin arranged at the contact points of carbon fibers was measured. When the thermosetting resin had an irregular shape, the inscribed circle diameter thereof was defined as the size of the thermosetting resin. The size of the thermosetting resin was measured at 50 arbitrary spots, and an arithmetic mean thereof was used as a representative value.

(Example 1)

A fiber-reinforced resin molded body was produced by the following procedure.

(1) Preform Forming Step

Using 14 sheets of the carbon fiber nonwoven fabric 1 having a size of 1,000 mm in length and 500 mm in width, a preform was formed on a mold release sheet laminated on a planar aluminum plate of 1,500 mm in length, 800 mm in width, and 5 mm in thickness.

(2) Injection Preparation Step

A single release sheet was laminated on top of the carbon fiber nonwoven fabric 1 (in the opposite direction of the aluminum plate), and a bagging film was applied thereon to enclose the resultant. The aluminum plate and the bagging film were immobilized with a sealant tape. The bagging film was provided with a margin of 50 mm in length on the edge so that it does not interfere with the final thickness of the resulting fiber-reinforced resin molded article. In this process, a depressurization hose was installed on the edge where the bagging film was arranged, and a total of three resin injection ports were attached to the upper surface of the preform at 250-mm intervals in the longitudinal direction of the preform. The depressurization hose was connected to a vacuum pump, and an excess resin collecting container was attached at a midpoint between the vacuum pump and the aluminum plate. Thereafter, as the depressurization step, the pressure was reduced using the vacuum pump until the degree of vacuum in the preform was -0.9 MPa, whereby the porosity of the continuous voids of the carbon fiber nonwoven fabric 1 was adjusted to be 90% by volume.

(3) Injection Step

The thermosetting resin 1, which had been produced in advance, was prepared in an amount of 6 kg, and divided into three equal parts of 2 kg each in 3-L metal containers. Subsequently, the viscosity of the thermosetting resin 1 was adjusted by heating to 60°C. Injection hoses connected to the above-described injection ports were inserted into the respective metal containers containing the thermosetting resin, and the resin was injected. The thermosetting resin was injected in an amount greater than the prescribed amount by 10%, and the excess resin was sucked out by depressurization and discharged to adjust the amount of the thermosetting resin 1.

(4) Preform Pressurization Step

After the resin injection step, a load was applied to the upper surface of the preform at a surface pressure of 0.1 MPa using a pressurizer, and the preform was left to stand for 1 minute to allow the injected thermosetting resin to uniformly permeate into the preform. In this process, a metal plate was arranged in a manner to avoid the resin injection hoses such that the load could be applied.

(5) Porosity Adjustment Step

The preform was taken out of a press machine along with the aluminum plate, and the depressurization hose of the enclosing bagging film was released to introduce the atmosphere, whereby the carbon fiber nonwoven fabric 1 was induced to spring-back. Simultaneously, by arranging an aluminum plate of the same size as the one on the edge of which a metal spacer and the preform were formed, the thickness was fixed without pressurization to adjust the porosity to be 80% by volume. In this process, the metal spacer had a thickness of 30 mm.

(6) Curing Step

The preform that expanded to a height of 30 mm in the previous step was placed in a large hot air oven to cure the thermosetting resin. The large hot air oven was preset at 150°C, and the preform loading time was 30 minutes.

(7) Removal Step

The preform was taken out of the large hot air oven, the enclosing bagging film was taken away, and a fiber-reinforced resin molded body was removed. The thus removed fiber-reinforced resin molded body had a thickness of 30 mm and a porosity of 80% by volume. Further, as a result of observing the outer appearance, no conspicuous resin pool or the like was found, and the fiber-reinforced resin molded body was favorable. The size of the thermosetting resin in the fiber-reinforced resin molded body was measured to be 100 $\mu$m.

(Example 2)

A fiber-reinforced resin molded body was obtained by the same steps as in Example 1, except that the liquid resin was changed to the thermosetting resin 2; the viscosity of the thermosetting resin 2 was adjusted by heating to 40°C in the injection step; and, in the curing step, the large hot air oven was set at 80°C and the preform loading time was 60 minutes. The thus obtained fiber-reinforced resin molded body had a thickness of 30 mm and a porosity of 80% by volume. Further, as a result of observing the outer appearance, no conspicuous resin pool or the like was found, and the fiber-reinforced resin molded body was favorable. The size of the thermosetting resin in the fiber-reinforced resin molded body was measured to be 120 $\mu$m.

(Example 3)

A fiber-reinforced resin molded body was obtained by the same steps as in Example 1, except that the resin injection step was performed in a state where the carbon fiber nonwoven fabric 1 was adjusted to have a porosity of 50% by volume by applying thereto a pressure of 5 MPa using a hydraulic press machine in the injection preparation step. The thus obtained fiber-reinforced resin molded body had a thickness of 30 mm and a porosity of 50% by volume and, although some parts not containing the thermosetting resin 1 were observed at the edge of the fiber-reinforced resin molded body, the amount thereof was within a range that would pose no problem in practical use if removed by cutting or the like. The size of the thermosetting resin in the fiber-reinforced resin molded body was measured to be 300 $\mu$m.

(Example 4)

A fiber-reinforced resin molded body was obtained by the same steps as in Example 1, except that, in the curing step, the metal spacer arranged in the porosity adjustment step was removed, and the preform was in a state of being pressurized at 0.5 MPa by a pressurizer. The thus obtained fiber-reinforced resin molded body had a thickness of 20 mm and, although the porosity was reduced to 65% by volume, this was within a range that would pose no problem in practical use. The size of the thermosetting resin in the fiber-reinforced resin molded body was measured to be 250 $\mu$m.

(Example 5)

A fiber-reinforced resin molded body was obtained by the same steps as in Example 1, except that the pressurization step was not performed after the injection preparation step. Although the thus obtained fiber-reinforced resin molded body had a thickness of 30 mm and a porosity of 80% by volume, the thickness of the fiber-reinforced resin molded body was uneven, with some parts having a maximum thickness of 40 mm and a minimum thickness of 25 mm. However, this was within a range that would pose no problem in practical use. The size of the thermosetting resin in the fiber-reinforced resin molded body was measured to be 150 $\mu$m.

(Example 6)

A fiber-reinforced resin molded body was obtained by the same steps as in Example 1, except that the carbon fiber nonwoven fabric 3 was used as the carbon fiber nonwoven fabric. Although the thus obtained fiber-reinforced resin molded body had a porosity of 80% by volume, the thickness of the fiber-reinforced resin molded body was uneven, with some parts having a maximum thickness of 40 mm and a minimum thickness of 25 mm; however, this was within a range that would pose no problem in practical use. The size of the thermosetting resin in the fiber-reinforced resin molded body was measured to be 250 $\mu$m.

(Example 7)

A fiber-reinforced resin molded body was obtained by the same steps as in Example 1, except that the carbon fiber nonwoven fabric 2 was used as the carbon fiber nonwoven fabric. The thus obtained fiber-reinforced resin molded body had a porosity of 80% by volume and a thickness of 30 mm. The fiber-reinforced resin molded body was observed with not only a resin pool in the vicinity of the resin injection port but also disarray of the carbon fibers in the carbon fiber nonwoven fabric 2; however, the fiber-reinforced resin molded body would be usable if these parts were removed. The size of the thermosetting resin in the fiber-reinforced resin molded body was measured to be 90 $\mu$m.

(Example 8)

A fiber-reinforced resin molded body was obtained by the same steps as in Example 1, except that the carbon fiber nonwoven fabric 5 was used as the carbon fiber nonwoven fabric. The thus obtained fiber-reinforced resin molded body had a porosity of 70% by volume and a thickness of 26 mm. The fiber-reinforced resin molded body was observed with not only a resin pool in the vicinity of the resin injection port but also disarray of the carbon fibers in the carbon fiber nonwoven fabric 5; however, the fiber-reinforced resin molded body would be usable if these parts were removed. The size of the thermosetting resin in the fiber-reinforced resin molded body was measured to be 200 $\mu$m.

(Example 9)

A fiber-reinforced resin molded body was produced by the following procedure.

(1) Preform Forming Step

A preform was formed by laminating 14 sheets of the carbon fiber nonwoven fabric 1 having a size of 1,000 mm in length and 500 mm in width, and covering the outermost circumference of the resulting carbon fiber nonwoven fabric laminate with a bidirectional fabric substrate. This preform was formed on a mold release sheet laminated on a planar aluminum plate of 1,500 mm in length, 800 mm in width, and 5 mm in thickness.

(2) Injection Preparation Step

A single release sheet was laminated on top of the carbon fiber nonwoven fabric 1 (in the opposite direction of the aluminum plate), and a bagging film was applied thereon to enclose the resultant. The aluminum plate and the bagging film were immobilized with a sealant tape. The bagging film was provided with a margin of 50 mm in length on the edge so that it does not interfere with the final thickness of the resulting fiber-reinforced resin molded article. In this process, a depressurization hose was installed on the edge where the bagging film was arranged, and a total of three resin injection ports were attached to the upper surface of the carbon fiber nonwoven fabric 1 at 250-mm intervals in the longitudinal direction in which the carbon fiber nonwoven fabric 1 was arranged. The depressurization hose was connected to a vacuum pump, and a container to which excess resin was to be discharged was attached at a midpoint between the vacuum pump and the aluminum plate. Thereafter, the pressure was reduced using the vacuum pump such that the degree of vacuum in the preform was -0.9 MPa, whereby the porosity of the continuous voids of the carbon fiber nonwoven fabric was adjusted to be 90% by volume.

(3) Injection Step

The thermosetting resin 1, which had been produced in advance, was prepared in an amount of 6 kg, and divided into three equal parts of 2 kg each in 3-L metal containers. Subsequently, the viscosity of the thermosetting resin 1 was adjusted by heating to 60°C. Injection hoses connected to the above-described injection ports were inserted into the respective metal containers containing the thermosetting resin, and the resin was injected. The thermoplastic resin was injected in an amount greater than the prescribed amount by 10%, and the excess resin was sucked out by depressurization and discharged.

(4) Preform Pressurization Step

After the resin injection step, a load was applied to the upper surface of the preform at a surface pressure of 3 MPa using a pressurizer, and the preform was left to stand for 1 minute to allow the injected thermosetting resin to uniformly permeate into the preform.

(5) Porosity Adjustment Step

The preform was taken out of the pressurizer along with the aluminum plate, and the depressurization hose of the enclosing bagging film was released to introduce the atmosphere, whereby the carbon fiber nonwoven fabric was induced to spring-back. Simultaneously, by arranging an aluminum plate of the same size as the one on which a metal spacer and the preform were formed on the edge, the thickness was adjusted to adjust the porosity. In this process, the metal spacer had a thickness of 32 mm.

(6) Curing Step

The preform that expanded to a height of 30 mm in the previous step was placed in a large hot air oven to cure the thermosetting resin. The large hot air oven was preset at 150°C, and the preform loading time was 30 minutes.

(7) Removal Step

The preform was taken out of the large hot air oven, the enclosing bagging film was taken away, and a fiber-reinforced resin molded body was removed. The thus removed fiber-reinforced resin molded body had a thickness of 32 mm and a porosity of 80% by volume. Further, as a result of observing the outer appearance, no conspicuous resin pool or the like was found, and the fiber-reinforced resin molded body was favorable. The size of the thermosetting resin in the fiber-reinforced resin molded body, which was measured after removing a skin layer from the molded body, was 100 $\mu$m.

(Example 10)

A fiber-reinforced resin molded body was obtained by the same steps as in Example 1, except that the carbon fiber nonwoven fabric 4 was used as the carbon fiber nonwoven fabric. The thus obtained fiber-reinforced resin molded body had a porosity of 80% by volume and a thickness of 30 mm. The fiber-reinforced resin molded body was observed with not only a resin pool, which was larger than the one observed in Example 8, in the vicinity of the resin injection port, but also disarray of the carbon fibers in the carbon fiber nonwoven fabric 4; however, the fiber-reinforced resin molded body would be usable if these parts were removed. The size of the thermosetting resin in the fiber-reinforced resin molded body was measured to be 200 $\mu$m.

(Comparative Example 1)

A fiber-reinforced resin molded body was produced using the carbon fiber nonwoven fabric 1 was used as a carbon fiber nonwoven fabric, with the pressure being adjusted in the period from a preform step to the curing step such that the molded body had a thickness giving a porosity of 20% by volume. The thus obtained fiber-reinforced resin molded body had a thickness of 7.2 mm and a porosity of 20% by volume. As a result of observing the outer appearance, it was found that the thermosetting resin did not completely permeate into the carbon fiber nonwoven fabric 1, and the carbon fiber nonwoven fabric 1 was partially exposed. Further, the fiber-reinforced resin molded body had a low porosity and a large weight, and was thus not suitable for use. As a result of selecting parts containing the thermosetting resin in the fiber-reinforced resin molded body and measuring the size of the resin, it was found that parts having a size of greatly exceeding 1,000 $\mu$m existed in a large number.

(Comparative Example 2)

A fiber-reinforced resin molded body was produced by the same steps as in Example 1, except that the carbon fiber nonwoven fabric 4 was used as the carbon fiber nonwoven fabric, and the porosity adjustment step was not performed. The thus obtained fiber-reinforced resin molded body had a thickness of 12 mm and a porosity of 35% by volume. As a result of observing the outer appearance, it was found that the thermosetting resin did not completely permeate into the carbon fiber nonwoven fabric 4, and the carbon fiber nonwoven fabric 4 was partially exposed. Further, the fiber-reinforced resin molded body had a low porosity and a large weight, and was thus not suitable for use. As a result of selecting parts containing the thermosetting resin in the fiber-reinforced resin molded body and measuring the size of the resin, it was found that the resin had a size of 2,000 $\mu$m.

[Table 1]

| | Unit | Example 1 | Example 2 | Example 3 | Example 4 | Example 5 | Example 6 |
|---|---|---|---|---|---|---|---|
| Carbon Fiber Nonwoven Fabric | | Carbon Fiber Nonwoven Fabric 1 | Carbon Fiber Nonwoven Fabric 1 | Carbon Fiber Nonwoven Fabric 1 | Carbon Fiber Nonwoven Fabric 1 | Carbon Fiber Nonwoven Fabric 1 | Carbon Fiber Nonwoven Fabric 3 |
| Content of Carbon Fiber having 25-50 mm Length in Nonwoven Fabric | [Mass%] | 0 | 0 | 0 | 0 | 0 | 30 |
| Content of Carbon Fiber having 0.1-25 mm Length in Nonwoven Fabric | [Mass%] | 100 | 100 | 100 | 100 | 100 | 70 |
| Whether Nonwoven Fabric is Composed of Discontinuous Carbon Fibres Disperced in Filament Units | | Disperced in Filament Units | Disperced in Filament Units | Disperced in Filament Units | Disperced in Filament Units | Disperced in Filament Units | 50 Mass% Bundles of 500 Strands were included |
| Binder Resin in Carbon Fiber Nonwoven Fabric | | Binder Resin 1 | Binder Resin 1 | Binder Resin 1 | Binder Resin 1 | Binder Resin 1 | Binder Resin 1 |
| Whether Contact Points of the Carbon Fibers are Covered with a Binder Resin and the thermosetting Resin in the Order mentioned | | Covered in this Order | Covered in this Order | Covered in this Order | Covered in this Order | Covered in this Order | Covered in this Order |
| Prosity in the Injection Preparation Step | [Vol%] | 90 | 90 | 50 | 90 | 90 | 80 |
| Liquid Thermosetting Resin | | Thermosetting Resin 1 | Thermosetting Resin 2 | Thermosetting Resin 1 | Thermosetting Resin 1 | Thermosetting Resin 1 | Thermosetting Resin 1 |
| Curing Temperature of Thermosetting Resin | [°C] | 150 | 80 | 150 | 150 | 150 | 150 |
| Melting Point of Binder Resin | [°C] | Not Observed | Not Observed | Not Observed | Not Observed | Not Observed | Not Observed |
| Glass Transition Temperature of Binder Resin | [°C] | 216 | 216 | 216 | 216 | 216 | 216 |
| Presence or Absence of Lamination of a Reinforcing Fiber Substrate Other than the Carbon Fiber Nonwoven Fabric | | Absence | Absence | Absence | Absence | Absence | Absence |
| Viscosity of Liquid Thermosetting Resin at the Injection | [mPa·s] | 200 | 250 | 200 | 200 | 200 | 200 |
| Degree of Curing of the Thermosetting Resin Composition at Curing Temperature | [%] | 90 | 90 | 90 | 90 | 90 | 90 |

EP 4 512 851 A1

| | Unit | Example 1 | Example 2 | Example 3 | Example 4 | Example 5 | Example 6 |
|---|---|---|---|---|---|---|---|
| Pressurization in the Curing Step | [MPa] | 0 | 0 | 0 | 0 | 0 | 0 |
| Pressurization in the Pressurization Step | [MPa] | 0.1 | 0.1 | 0.1 | 0.5 | | 0.1 |
| Porosity after Adiustment in the Porosity Adjustment Step | [Vol%] | 80 | 80 | 80 | 80 | 80 | 80 |
| Pressure Control in the Closed Space in the Porosity Adiustment Step | | Absence | Absence | Absence | Pressed at 0.5MPa | Absence | Absence |
| Pressure Relaxation in Enclosed Space at the Void Adiustment Step | | Presence | Presence | Presence | Presence | Presence | Presence |
| Curing Temperature at the Curing Step | [°C] | 150 | 80 | 150 | 150 | 150 | 150 |
| Thickness of Fiber Reinforced Resin Molded Body | [mm] | 30 | 30 | 30 | 20 | 30 | 25~40 |
| Porosity of Continuous Voids in the Fiber Reinforced Resin Molded Body | [Vol%] | 80 | 80 | 50 | 65 | 80 | 80 |
| Size of Thermosetting Resin in the Fiber Reinforced Resin Molded Body | [μm] | 100 | 120 | 300 | 250 | 150 | 250 |
| Length of the Fiber Reinforced Resin Molded Body | [m] | 1 | 1 | 1 | 1 | 1 | 1 |
| Width of the Fiber Reinforced Resin Molded Body | [m] | 0.5 | 0.5 | 0.5 | 0.5 | 0.5 | 0.5 |
| Outer Appearance of Fiber Reinforced Resin Molded Body | | Good | Good | Fair | Fair | Uneven Thickness | Uneven Thickness |

[Table 2]

| | Unit | Example 7 | Example 8 | Example 9 | Example 10 | Comparative Example 1 | Comparative Example 2 |
|---|---|---|---|---|---|---|---|
| Carbon Fiber Nonwoven Fabric | | Carbon Fiber Nonwoven Fabric 2 | Carbon Fiber Nonwoven Fabric 5 | Carbon Fiber Nonwoven Fabric 1 | Carbon Fiber Nonwoven Fabric 4 | Carbon Fiber Nonwoven Fabric 1 | Carbon Fiber Nonwoven Fabric 4 |
| Content of Carbon Fiber having 25-50 mm Length in Nonwoven Fabric | [Mass%] | 0 | 0 | 0 | 0 | 0 | 0 |
| Content of Carbon Fiber having 0.1-25 mm Length in Nonwoven Fabric | [Mass%] | 100 | 100 | 100 | 100 | 100 | 100 |
| Whether Nonwoven Fabric is Composed of Discontinuous Carbon Fibres Disperced in Filament Units | | Disperced in Filament Units | No Note) | Disperced in Filament Units | Disperced in Filament Units | Disperced in Filament Units | Disperced in Filament Units |
| Binder Resin in Carbon Fiber Nonwoven Fabric | | Binder Resin 2 | Binder Resin 1 | Binder Resin 1 | - | Binder Resin 1 | - |
| Whether Contact Points of the Carbon Fibers are Covered with a Binder Resin and the thermosetting Resin in the Order mentioned | | Covered in this Order | Covered in this Order | Covered in this Order | - | Covered in this Order | - |
| Prosity in the Injection Preparation Step | [Vol%] | 90 | 90 | 90 | 90 | 20 | 20 |
| Liquid Thermosetting Resin | | Thermosetting Resin 1 | Thermosetting Resin 1 | Thermosetting Resin 1 | Thermosetting Resin 1 | Thermosetting Resin 1 | Thermosetting Resin 1 |
| Curing Temperature of Thermosetting Resin | | 150 | 150 | 150 | 150 | 150 | 150 |
| Melting Point of Binder Resin | | 65 | Not Observed | Not Observed | - | Not Observed | - |
| Glass Transition Temperature of Binder Resin | | Indistinct | 216 | 216 | - | 216 | - |
| Presence or Absence of Lamination of a Reinforcing Fiber Substrate Other than the Carbon Fiber Nonwoven Fabric | | Absence | Absence | Presence | Absence | Absence | Absence |
| Viscosity of Liquid Thermosetting Resin at the Injection | [mPa·s] | 200 | 200 | 200 | 200 | 200 | 200 |
| Degree of Curing of the Thermosetting Resin Composition at Curing Temperature | [%] | 90 | 90 | 90 | 90 | 90 | 90 |

EP 4 512 851 A1

| | Unit | Example 7 | Example 8 | Example 9 | Example 10 | Comparative Example 1 | Comparative Example 2 |
|---|---|---|---|---|---|---|---|
| Pressurization in the Curing Step | [MPa] | 0 | 0 | 0 | 0 | 2.5 | 0 |
| Pressurization in the Pressurization Step | [MPa] | 0.1 | 0.1 | 3 | 0.1 | 0.1 | 0.1 |
| Porosity after Adjustment in the Porosity Adjustment Step | [Vol%] | 80 | 70 | 80 | 80 | 20 | - |
| Pressure Control in the Closed Space in the Porosity Adiustment Step | | Absence | Absence | Absence | Absence | Presence | Absence |
| Pressure Relaxation in Enclosed Space at the Void Adiustment Step | | Presence | Presence | Presence | Presence | Absence | Absence |
| Curing Temperature at the Curing Step | [°C] | 150 | 150 | 150 | 150 | 150 | 150 |
| Thickness of Fiber Reinforced Resin Molded Body | [mm] | 30 | 26 | 32 | 30 | 7.2 | 12 |
| Porosity of Continuous Voids in the Fiber Reinforced Resin Molded Body | [Vol%] | 80 | 70 | 80 | 80 | 20 | 35 |
| Size of Thermosetting Resin in the Fiber Reinforced Resin Molded Body | [μm] | 90 | 200 | 100 | 200 | 1000 | 2000 |
| Length of the Fiber Reinforced Resin Molded Body | [m] | 1 | 1 | 1 | 1 | 1 | 1 |
| Width of the Fiber Reinforced Resin Molded Body | [m] | 0.5 | 0.5 | 0.5 | 0.5 | 0.5 | 0.5 |
| Outer Appearance of Fiber Reinforced Resin Molded Body | | Fair | Fair | Good | Fair | Failure | Failure |

Note) 30 Mass% Bundles of 600 Strands and 70 Mass% Bundles of 200 Strands were included.

Industrial Applicability

The fiber-reinforced resin molded body of the present invention can be utilized in many fields, including: members and interior materials of aircrafts such as airplanes, artificial satellites, UAMs (Urban Air Mobilities), and drones, in which the fiber-reinforced resin molded body is used as a structural member of these flying objects that requires a large size, lightweightness, and rigidity; members and interior materials of automobiles, railway vehicles, and ships, in which the fiber-reinforced resin molded body is used as a structural member of these mobile objects; civil engineering and construction members; panel members for indoor and outdoor acoustic control; electronic equipment casings; and sporting goods.

**Claims**

1.  A fiber-reinforced resin molded body, having continuous voids and comprising:

    a carbon fiber nonwoven fabric; and
    a thermosetting resin,
    wherein
    the continuous voids have a porosity of 50% by volume to 97% by volume, and
    contact points of discontinuous carbon fibers constituting the carbon fiber nonwoven fabric are immobilized by the thermosetting resin having a substantially spherical shape of 40 $\mu$m to 300 $\mu$m in diameter.

2.  The fiber-reinforced resin molded body according to claim 1, wherein the contact points of the carbon fibers constituting the carbon fiber nonwoven fabric are covered with a binder resin and the thermosetting resin in the order mentioned.

3.  The fiber-reinforced resin molded body according to claim 1 or 2, wherein either of a melting point and a glass transition temperature of the binder resin, whichever higher, is equal to or higher than a curing temperature of the thermosetting resin.

4.  The fiber-reinforced resin molded body according to any one of claims 1 to 3, wherein the thermosetting resin contains at least one thermosetting resin selected from the group consisting of epoxy resins, phenol resins, unsaturated polyester resins, and vinyl ester resins.

5.  The fiber-reinforced resin molded body according to any one of claims 1 to 4, wherein the binder resin contains a resin formed of a polymer having at least one functional group selected from the group consisting of an amino group, a carboxyl group, an acid anhydride group, an epoxy group, an imino group, an aryl group, a ketone group, and an isocyanate group.

6.  The fiber-reinforced resin molded body according to any one of claims 1 to 5, wherein the carbon fiber nonwoven fabric contains carbon fibers having a fiber length of 25 mm to 50 mm in a range of 1% by mass or more but less than 50% by mass, and carbon fibers having a fiber length of 0.1 mm or more but less than 25 mm in a range of more than 50% by mass.

7.  The fiber-reinforced resin molded body according to any one of claims 1 to 5, wherein the carbon fiber nonwoven fabric is composed of aggregates of 100 or more but less than 1,000 carbon fiber filaments, and aggregates of 1 or more but less than 100 carbon fiber filaments.

8.  The fiber-reinforced resin molded body according to any one of claims 1 to 5, wherein the carbon fiber nonwoven fabric is composed of discontinuous carbon fibers dispersed in filament units.

9.  The fiber-reinforced resin molded body according to any one of claims 1 to 8, having a length of 0.1 m to 5 m and a width of 0.1 m to 1.5 m.

10. A structural member comprising the fiber-reinforced resin molded body according to any one of claims 1 to 9, to which a bending load is mainly applied.

11. A structural member for a mobile object, comprising the fiber-reinforced resin molded body according to claim 9.

12. A structural member for a flying object, comprising the fiber-reinforced resin molded body according to claim 9.

13. A panel member for acoustic control, in which a surface material is the fiber-reinforced resin molded body according to claim 1.

14. A method of producing a fiber-reinforced resin molded body, the method comprising the following steps in the order mentioned:

preform forming step: the step of forming a preform including a carbon fiber nonwoven fabric in a molding die;
injection preparation step: the step of forming a closed space in which the preform is arranged;
injection step: the step of injecting a liquid thermosetting resin into the closed space;
porosity adjustment step: the step of allowing the carbon fiber nonwoven fabric to expand in the thickness direction; and
curing step: the step of maintaining a temperature equal to or higher than a curing temperature of the thermosetting resin.

15. The method of producing a fiber-reinforced resin molded body according to claim 14, wherein, in the injection preparation step, the carbon fiber nonwoven fabric is adjusted to have a porosity of 80% by volume to 97% by volume in the closed space.

16. The method of producing a fiber-reinforced resin molded body according to claim 14 or 15, wherein, in the porosity adjustment step, the preform injected with the liquid thermosetting resin is adjusted to have a porosity of 10% by volume to 97% by volume.

17. The method of producing a fiber-reinforced resin molded body according to any one of claims 14 to 16, wherein, in the injection step, the liquid thermosetting resin is injected after being adjusted to have a viscosity of 1 mPa·s to 1,000 mPa·s.

18. The method of producing a fiber-reinforced resin molded body according to any one of claims 14 to 17, wherein, in the porosity adjustment step, the thickness of the preform is adjusted by controlling the pressure inside the closed space.

19. The method of producing a fiber-reinforced resin molded body according to claim 18, wherein, in the porosity adjustment step, the thickness of the preform is adjusted by inducing the carbon fiber nonwoven fabric to spring-back and expand through relaxation of the pressure inside the closed space.

20. The method of producing a fiber-reinforced resin molded body according to any one of claims 14 to 19, wherein the curing step does not involve pressurization of the preform.

21. The method of producing a fiber-reinforced resin molded body according to any one of claims 14 to 19, further comprising the pressurization step of pressurizing the preform after the injection step but before the curing step.

22. The method of producing a fiber-reinforced resin molded body according to any one of claims 14 to 19, wherein, in the preform forming step, a preform in which a reinforcing fiber substrate other than the carbon fiber nonwoven fabric is further laminated as an outermost layer is arranged.

## INTERNATIONAL SEARCH REPORT

| | International application No. |
|---|---|
| | **PCT/JP2023/015001** |

### A. CLASSIFICATION OF SUBJECT MATTER

*C08J 5/04*(2006.01)i; *B29C 70/12*(2006.01)i; *B29C 70/48*(2006.01)i; *B29C 70/54*(2006.01)i; *B29K 307/04*(2006.01)n
FI: C08J5/04; B29C70/12; B29C70/48; B29C70/54; B29K307:04

According to International Patent Classification (IPC) or to both national classification and IPC

### B. FIELDS SEARCHED

Minimum documentation searched (classification system followed by classification symbols)
B29B11/16;15/08-15/14; C08J5/04-5/10;5/24; B29C70/00-70/88

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/110532 A1 (TORAY INDUSTRIES, INC.) 29 June 2017 (2017-06-29) claims, paragraphs [0027], [0029]-[0031], [0044], [0056], [0057], [0060]-[0062], [0065]-[0067], examples, tables 1-3 | 1-4, 7-13 |
| Y | | 5, 14-22 |
| A | | 6 |
| X | WO 2017/110528 A1 (TORAY INDUSTRIES, INC.) 29 June 2017 (2017-06-29) claims, paragraphs [0032], [0033], [0046], [0056], [0057], [0060]-[0062], [0065]-[0067], examples, tables 1-3 | 1-4, 7-13 |
| Y | | 5, 14-22 |
| A | | 6 |
| Y | JP 2006-77343 A (TORAY INDUSTRIES, INC.) 23 March 2006 (2006-03-23) claims, paragraphs [0003], [0028], [0039], examples | 5, 14-22 |
| A | WO 2016/136791 A1 (TORAY INDUSTRIES, INC.) 01 September 2016 (2016-09-01) entire text | 1-22 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/015001**

**C.      DOCUMENTS CONSIDERED TO BE RELEVANT**

| Category* | Citation of document, with indication, where appropriate, of the relevant passages | Relevant to claim No. |
|---|---|---|
| A | WO 2016/136793 A1 (TORAY INDUSTRIES, INC.) 01 September 2016 (2016-09-01) entire text | 1-22 |

Form PCT/ISA/210 (second sheet) (January 2015)

**INTERNATIONAL SEARCH REPORT**
Information on patent family members

International application No.

**PCT/JP2023/015001**

| Patent document cited in search report | | | Publication date (day/month/year) | Patent family member(s) | | | Publication date (day/month/year) |
|---|---|---|---|---|---|---|---|
| WO | 2017/110532 | A1 | 29 June 2017 | US | 2019/0002654 | A1 | |
| | | | | claims, paragraphs [0068], [0069], [0072]-[0074], examples, tables 1-3 | | | |
| | | | | EP | 3395868 | A1 | |
| | | | | KR | 10-2018-0084915 | A | |
| | | | | CN | 108431099 | A | |
| WO | 2017/110528 | A1 | 29 June 2017 | US | 2019/0002655 | A1 | |
| | | | | claims, paragraphs [0067], [0068], [0071]-[0075], examples, tables 1-3 | | | |
| | | | | EP | 3395867 | A1 | |
| | | | | KR | 10-2018-0082568 | A | |
| | | | | CN | 108431098 | A | |
| JP | 2006-77343 | A | 23 March 2006 | (Family: none) | | | |
| WO | 2016/136791 | A1 | 01 September 2016 | US | 2018/0244879 | A1 | |
| | | | | EP | 3263631 | A1 | |
| | | | | KR | 10-2017-0125879 | A | |
| | | | | CN | 107406599 | A | |
| WO | 2016/136793 | A1 | 01 September 2016 | US | 2018/0044488 | A1 | |
| | | | | EP | 3263632 | A1 | |
| | | | | CN | 107250223 | A | |
| | | | | KR | 10-2017-0124545 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006077343 A
- WO 2017110528 A
- JP 2016151081 A